# EUROPÄISCHE PATENTSCHRIFT

(11) **EP 3 550 140 B1**
(45) Veröffentlichungstag und Bekanntmachung des Hinweises auf die Patenterteilung: **01.12.2021**
(21) Anmeldenummer: 19164902.9
(22) Anmeldetag: 25.03.2019
(51) Int. Cl.: F03D 13/20, F03D 80/70, F03D 80/80

(54) **MASCHINENTRÄGER FÜR EINE WINDENERGIEANLAGE**
MACHINE SUPPORT FOR WIND TURBINE
SUPPORT DE MACHINE POUR ÉOLIENNE

(30) Priorität: 28.03.2018 DE 102018002553
(43) Veröffentlichungstag der Anmeldung: 09.10.2019
(73) Patentinhaber: Senvion GmbH, 22297 Hamburg (DE)
(72) Erfinder: Trede, Alf, 25885 Immenstedt (DE); Eusterbarkey, Carsten, 25813 Simonsberg (DE)
(74) Vertreter: Glawe, Delfs, Moll

(56) Entgegenhaltungen:
- EP-A2- 1 251 306
- WO-A1-97/03288
- WO-A1-2013/185768
- WO-A2-2012/119603
- US-A1- 2012 134 811

## Beschreibung

Die Erfindung betrifft einen Maschinenträger zur Lagerung des Triebstrangs einer Windenergieanlage sowie eine Anordnung umfassend einen solchen Maschinenträger und eine Windenergieanlage mit einer entsprechenden Anordnung.

Bei bekannten Windenergieanlagen lässt sich ein um eine im Wesentlichen horizontale Achse drehbarer Rotor durch Wind in Rotation versetzen. Der Rotor ist bei einer üblichen Bauform dabei fest mit einer Rotorwelle und dadurch, ggf. über ein zwischengeschaltetes Getriebe, mit einem Generator zur Umwandlung der Rotationsenergie des Rotors in elektrische Energie verbunden. Die rotierenden Komponenten vom Rotor bis zum Generator werden als Triebstrang bezeichnet.

Zur Lagerung ist als eine von mehreren Varianten bekannt, den Triebstrang der Windenergieanlage mit einer sog. Drei-Punkt-Lagerung zu lagern (vgl. bspw. DE 10 2006 027 543 A1). Die Rotorwelle wird dabei durch ein nahe dem Verbindungsbereich zum Rotor angeordnetes vorderes Lager gelagert und im hinteren Bereich an das Getriebe angebunden, welches an zwei seitlichen Getriebeauflagern an dem Maschinenträger der Windenergieanlage befestigt ist. Die Rotorwelle wird bei einer solchen Drei-Punkt-Lagerung insbesondere im Hinblick auf Biegebelastungen über die Lager des Getriebes gestützt.

Alternativ hierzu sind dem Fachmann noch die Vier-Punkt-Lagerung (s. bspw. WO 2011/051369 A2), die Momentenlagerung (s. bspw. DE 102 47 072 A1) sowie die Zapfenlagerung bekannt. Auch die Dokumente US 2012/134811 A1, WO 2013/185768 A1, EP 1 251 306 A2 und WO 97/03288 A1 zeigen Varianten der Lagerung des Triebstrangs einer Windenergieanlage.

Bei fast allen bekannten Lagerungsvarianten führen die über die Lagerung in die Tragstruktur der Gondel der Windenergieanlagen eingeleiteten Kräfte und Momente zu Verformungen eben dieser Tragstruktur. Um diesen Verformungen entgegenzuwirken, werden verschiedene Versteifungsmaßnahmen vorgeschlagen und angewandt, die jedoch regelmäßig ein erhöhtes Gewicht der Tragstruktur zur Folge haben. Bei der Zapfenlagerung tritt häufig nur eine vergleichsweise geringe Verformung der Tragstruktur auf; allerdings ist, sofern es sich nicht um eine direktangetriebene Windenergieanlage handelt, eine gesonderte Welle zur Übertragung des Drehmomentes zum Generator erforderlich.

Aufgabe der vorliegenden Erfindung ist es, eine gegenüber dem Stand der Technik verbesserte Tragstruktur für den Triebstrang einer Windenergieanlage zu schaffen.

Gelöst wird diese Aufgabe durch einen Maschinenträger gemäß dem Hauptanspruch, eine Anordnung gemäß Anspruch 6 sowie eine Windenergieanlage gemäß Anspruch 14. Vorteilhafte Weiterbildungen sind Gegenstand der abhängigen Ansprüche.

Demnach betrifft die Erfindung einen Maschinenträger zur Lagerung des Triebstrangs einer Windenergieanlage mit zwei voneinander beabstandeten Lagerpunkten, wobei an wenigstens einem Lagerpunkt ein Teilflansch mit einem kreisringsegmentförmigen Befestigungsbereich vorgesehen ist, wobei der kreisringsegmentförmige Befestigungsbereich eine Vielzahl von Bohrungen zur Axialverschraubung mit einem Ringelement aufweist.

Weiterhin betrifft die Erfindung eine Anordnung zur Lagerung des Triebstrangs einer Windenergieanlage, umfassend einen Maschinenträger nach einem der vorhergehenden Ansprüche und wenigstens ein zum radialen Umschließen des Triebstrangs ausgebildetes Ringelement, wobei wenigstens ein Ringelement an dem kreisringsegmentförmigen Befestigungsbereich eines Lagerpunktes des Maschinenträgers befestigt ist.

Die Erfindung betrifft auch eine Windenergieanlage mit einem Triebstrang umfassend eine Rotorwelle und ein Getriebe, wobei der Triebstrang durch eine erfindungsgemäße Anordnung gelagert ist.

In dem der Maschinenträger an zumindest einem Lagerpunkt einen Teilflansch mit einem kreisringsegmentförmigen Befestigungsbereich aufweist, können die über diesen Lagerpunkt in den Maschinenträger eingebrachten Lasten über eine große Fläche verteilt eingeleitet werden. In der Folge sind anders als im bekannten Stand der Technik keine örtlich fokussierten Belastungsspitzen zu erwarten, die entweder große Verformungen zur Folge haben oder aber - zur Eindämmung der Verformung - eine massive Bauweise der Tragstruktur erfordern. Indem eine großflächig verteilte Lasteinleitung in den Maschinenträger erfolgt, kann dieser entsprechend kleiner und leichter dimensioniert werden.

Die Erfindung ermöglicht es weiterhin, dass die Krafteinleitung von einem Teilflansch in den Maschinenträger nahe der Befestigung des Maschinenträgers mit dem Turm erfolgt, wodurch Verwindungen des Maschinenträgers im Vergleich zum Stand der Technik deutlich reduziert werden können.

Es ist bevorzugt, wenn der kreisringsegmentförmigen Befestigungsbereich und/oder der Teilflansch wenigstens eines Lagerpunktes ein Winkelsegment von 30° bis 280°, vorzugsweise 40° bis 200°, weiter vorzugsweise 80° bis 180° umfasst. Erstreckt sich der Befestigungsbereich über entsprechende Winkelbereiche, kann eine gute Lastverteilung erreicht werden. Durch einen großen Winkelbereich des Befestigungsbereichs kann außerdem ein daran befestigte Ringelement versteift werden. Ist das Winkelsegment des Befestigungsbereichs und/oder des Teilflansches auf 180° begrenzt, kann weiterhin ein Ringelement bzw. ein Triebstrang oder der Teil eines Triebstrangs mit daran montiertem Ringelement in radialer Richtung in den entsprechenden Lagerpunkt des Maschinenträgers eingeführt werden. Die bspw. von der Drei-Punkt-Lagerung bekannte Montage eines mitsamt Lager vormontierten Triebstrangs, bei dem der Triebstrang von oben in die in offener Bauweise ausgestalteten und ebenfalls vormontierten Tragstruktur eingesetzt wird, ist somit ebenfalls möglich. Die Achse des kreisringsegmentförmigen Befestigungsbereichs und/oder des Teilflansches ist vorzugsweise derart ausgerichtet, dass sie im Verwendungszustandes des Maschinenträgers im Wesentlichen parallel zu einer Achse des Triebstrangs verläuft und/oder mit einer entsprechenden Achse zusammenfällt.

Es ist bevorzugt, wenn der kreisringsegmentförmige Befestigungsbereich eine kreissegmentförmige Radialanschlagfläche für das Ringelement aufweist. Das Ringelement ist dann nicht nur mit dem kreisringsegmentförmigen Befestigungsbereich zu verbinden, sondern kann auch noch an der dort vorgesehenen Radialanschlagfläche anliegen. Belastungen, die als Anpresskräfte vom Ringelement auf die Radialanschlagfläche wirken, können somit besonders gut und direkt in den Maschinenträger abgeleitet werden.

Alternativ dazu ist es auch möglich, wenn der Teilflansch eine von eine Kreissegmentform abweichende, vorzugsweise elliptische oder wannenförmige Radialanschlagfläche für das Ringelement aufweist. Während die als Anpresskräfte auf diese Fläche wirkende Belastungen weiterhin gut abgeleitet werden können, ermöglicht eine von der Kreisform des Befestigungsbereichs abweichende Formgebung die Aufnahme von Rotationsmomenten des Triebstrangs unmittelbar über die Radialanschlagfläche - sofern selbstverständlich auch das Ringelement eine entsprechende Formgebung aufweist.

Der kreisringsegmentförmige Befestigungsbereich weist erfindungsgemäß eine Vielzahl von, vorzugsweise in einem radialen Bohrmuster angeordneten Bohrungen zur Axialverschraubung mit dem Ringelement auf. Über die Vielzahl der Bohrungen kann eine lösbare, die Belastung gut über den Befestigungsbereich verteilende Verbindung zwischen Maschinenträger und Ringelement geschaffen werden.

Bei der erfindungsgemäßen Anordnung ist zumindest ein Ringsegment vorgesehen, welches an einem dafür vorgesehenen Befestigungsbereich des Maschinenträgers befestigt ist. Das wenigstens eine Ringsegment ist zum radialen Umschließen des Triebstrangs einer Windenergieanlage ausgebildet. In anderen Worten liegt das Ringsegment im vollständig montierten Zustand der Anordnung sowie dem Triebstrang also ringförmig um eben diesen Triebstrang, häufig um die Rotorwelle und koaxial mit dieser. Es ist bevorzugt, wenn die Anordnung zwei Ringelemente, die jeweils an einem erfindungsgemäß ausgestalteten Lagerpunkt des Maschinenträgers befestigt sind, umfasst.

Das eine Ringsegment oder wenigstens eines der beiden Ringsegmente kann als Lagergehäuse mit einer Lageraufnahme, bspw. für ein Rotorwellenlager, ausgebildet sein. Ein entsprechendes Lager, in der Regel ein Rollenlager, vorzugsweise ein Pendel-, Zylinder-, Kegelrollen- oder Toroidallager, kann demnach in der Lageraufnahme angeordnet sein. Alternativ zu einem Rollenlager kann auch ein Gleitlager vorgesehen sein. Ist eine vollständige Lagerung des Triebstrangs und insbesondere der Rotorwelle nach Art einer Vierpunktlagerung durch entsprechende Lager gewünscht, können auch beide Ringsegmente als Lagergehäuse mit jeweils einer Lageraufnahme ausgestaltet sein.

Es ist aber auch möglich, dass das oder ein Ringelement als Befestigungsspant für ein Getriebe ausgestaltet ist. In diesem Fall wird der Triebstrang zunächst durch ein Lager im Getriebe drehbar gelagert, wobei das Getriebegehäuse und die darin integrierte Lageraufnahme an dem Befestigungsspant befestigt sind. Ist bspw. ein weiteres Ringelement vorgesehen und wie zuvor beschrieben als Lagergehäuse ausgeführt, ergibt sich mit einem Ringelement als Befestigungsspant eine mit der Drei-Punkt-Lagerung vergleichbare Lagerung.

Am Befestigungsspant können elastische Kopplungselemente zur Vibrationsentkopplung des Getriebes vorgesehen sein. Die Kopplungselemente können bspw. als sog. Ultra-Buchse ausgeführt sein, bei denen zwei konzentrisch angeordnete Buchsen über eine elastisch verformbare Zwischenraumfüllung miteinander verbunden sind. Ist bspw. die äußere Hülse in den Befestigungsspant eingepasst oder auf andere Weise mit diesem fest verbunden, kann sich eine an der inneren Hülse angreifende Bolzenverbindung im durch die Zwischenraumfüllung definierten Maße gegenüber dem Befestigungsspant bewegen und so bspw. Vibrationen entkoppeln. Alternativ ist möglich, zwischen Befestigungsspant und Getriebe elastisch verformbare Abstandshalter vorzusehen und die Befestigung des Getriebes an dem Befestigungsspant derart beweglich zu gestalten, dass die Abstandshalter die Vibrationen des Getriebes vom Befestigungsspant entkoppeln.

Ein Ringelement kann - unabhängig, von dessen letztendlicher Ausgestaltung - eine axiale Versteifungsrippe aufweisen. Selbstverständlich ist es auch möglich, mehrere Versteifungsrippen vorzusehen. Auch kann insbesondere in den Bereichen eines Ringelements, die nicht zur unmittelbaren Verbindung mit dem Befestigungsbereich eines Lagerpunktes des Maschinenträgers vorgesehen sind, wodurch regelmäßig bereits eine gewisse Versteifung erreicht wird (siehe oben), eine radiale Versteifung vorgesehen werden.

Es ist bevorzugt, wenn das wenigstens eine Ringelement durch Verschraubung, insbesondere über vorspannbare Gewindebolzen, mit dem Maschinenträger verbunden ist. Dadurch wird eine lösbare Verbindung erreicht, die insbesondere bei einer Vielzahl von Gewindebolzen eine gut verteilte Krafteinleitung vom Ringelement in den Maschinenträger gewährleistet.

Die Anordnung umfasst weiterhin vorzugsweise den Triebstrang eine Windenergieanlage, wobei wenigstens ein Ringelement koaxial um die Rotorwelle des Triebstrangs angeordnet ist.

Zur Erläuterung der erfindungsgemäßen Windenergieanlage wird auf die vorstehenden Ausführungen verwiesen.

Die Erfindung wird nun anhand einer bevorzugten Ausführungsform unter Bezugnahme auf die beigefügten Zeichnungen beispielhaft beschrieben. Es zeigen:
- Figur 1:: eine Schnittansicht durch ein erstes Ausführungsbeispiel einer erfindungsgemäßen Anordnung;
- Figur 2:: Detailansichten des erfindungsgemäßen Maschinenträgers der Anordnung aus Figur 1;
- Figur 3:: Detailansichten des einen Ringelementes der Anordnung aus Figur 1; und
- Figur 4:: Detailansichten des anderen Ringelementes der Anordnung aus Figur 1.

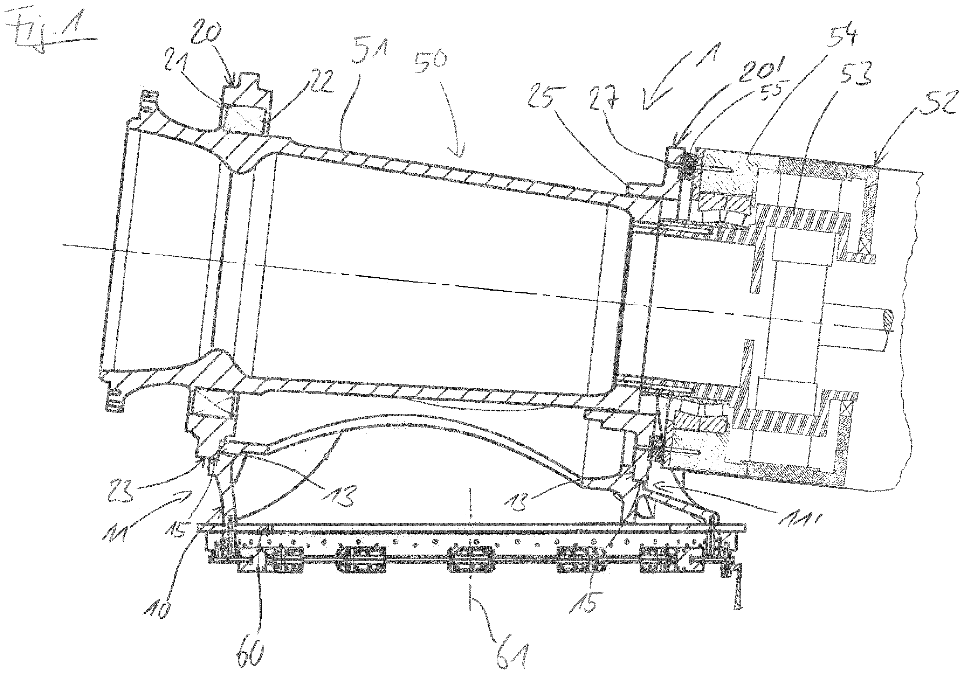

In Figur 1 ist eine erfindungsgemäße Anordnung 1 zur Lagerung des Triebstrangs 50 einer Windenergieanlage schematisch dargestellt. Von dem Triebstrang 50 der Windenergieanlage sind in Figur 1 lediglich die Rotorwelle 51 sowie teilweise das damit verbundene Getriebe 52 dargestellt. Bei dem Getriebe 52 handelt es sich um ein Planetengetriebe, dessen Planetenträger 53 fest mit der Rotorwelle verbunden ist. Nicht dargestellt ist der eigentliche Rotor umfassend die Rotorblätter am von dem Getriebe 52 entgegengesetzten Ende der Rotorwelle 51 sowie der am nicht dargestellten Ende des Getriebes 52 angeordnete Generator.

Der Triebstrang 50 ist durch die erfindungsgemäße Anordnung 1 aus Maschinenträger 10 und zwei daran befestigten Ringelementen 20, 20' gelagert.

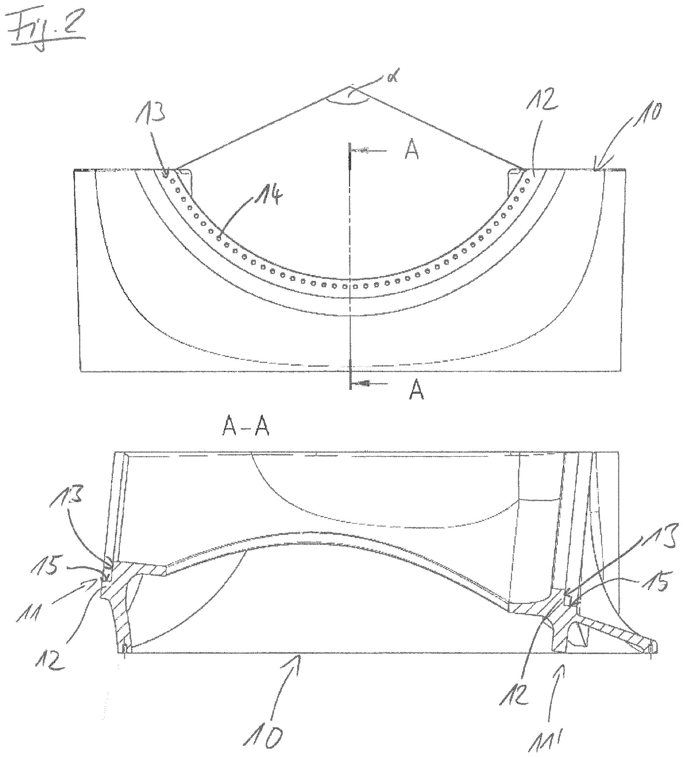

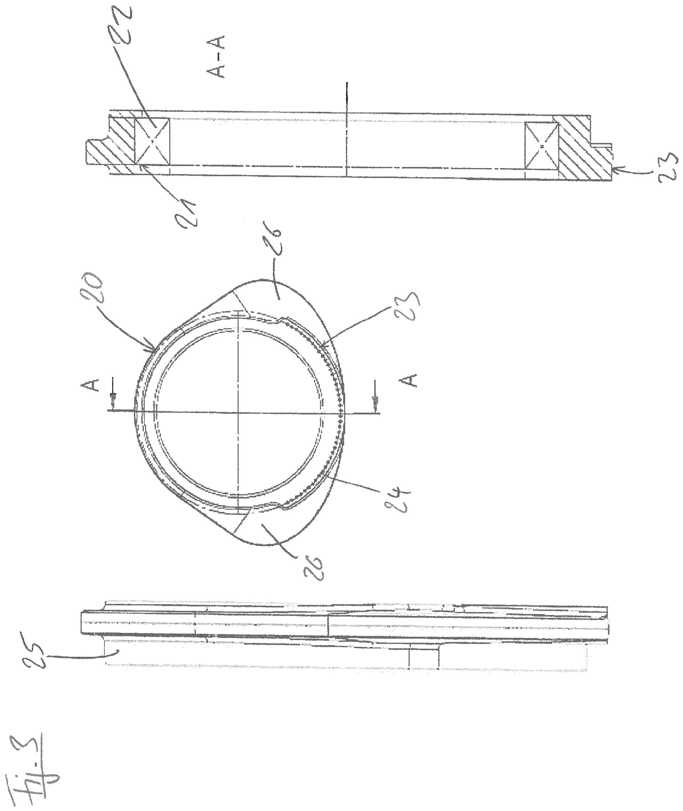

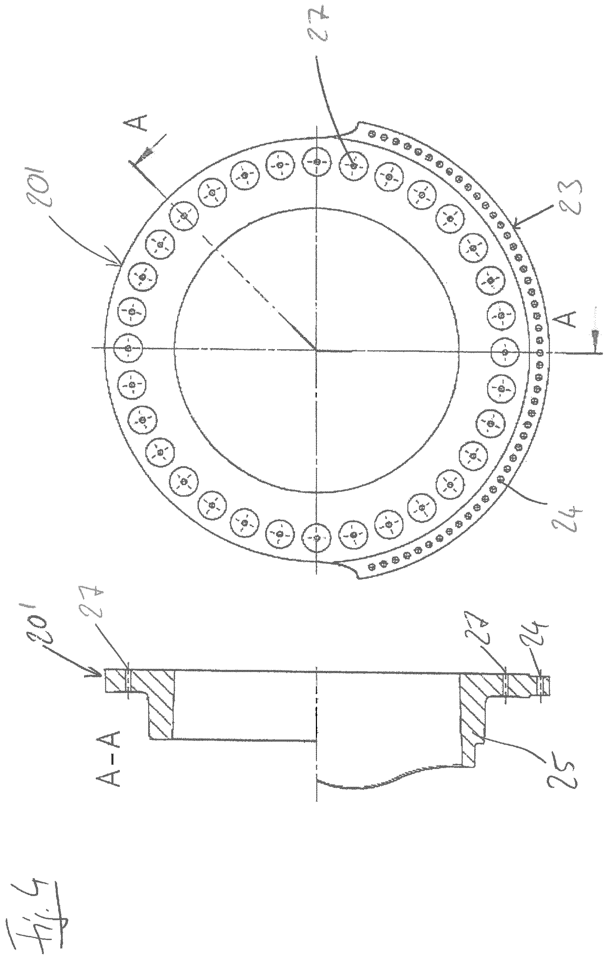

Der Maschinenträger 10 - der in Figur 2 zusätzlich isoliert und detailliert dargestellt ist - weist zwei voneinander beabstandete Lagerpunkte 11, 11' auf, an denen jeweils ein Ringelement 20, 20' befestigt ist. Zur Befestigung weist der Maschinenträger an jedem Lagerpunkt 11, 11' einen Teilflansch 12 mit in diesem Ausführungsbeispiel kreisringsegmentförmigen Befestigungsbereich 13 auf, welcher jeweils eine Vielzahl von Bohrungen 14 in axialer und somit in zur Achse des Triebstrangs 50 paralleler Richtung aufweist, die in einem radialen Bohrmuster angeordnet sind. Die Bohrungen 14 weisen jeweils ein Innengewinde auf, sodass die Ringelemente 20, 20', die jeweils entsprechende Bohrmuster von Durchgangslöchern 24 aufweisen (vgl. Figuren 3 und 4), über ein Schraubfeld an dem Maschinenträger 10 befestigt werden können. Das Bohrmuster des Lagerpunktes 11' ist in Figuren 1 und 2 nicht dargestellt, ergibt sich aber unmittelbar aus dem entsprechenden Bohrmuster des dort befestigten Ringelementes 20' (vgl. Figur 4).

Das Winkelsegment des Teilflansches 12 bzw. des Befestigungsbereichs 13 des einen Lagerpunktes 11 umfasst, wie in Figur 2 als Winkel α angedeutet, ca. 130°, während das Winkelsegment des Teilflansches 12 bzw. des Befestigungsbereichs 13 des anderen Lagerpunktes 11' (nicht dargestellt) ca. 150° umfasst.

Unmittelbar an den kreisringsegmentförmigen Befestigungsbereichen 13 ist jeweils eine kreissegmentförmige Radialanschlagfläche 15 angeordnet, an der das jeweilige Ringelement 20, 20' an- bzw. aufliegt (vgl. Figur 1). In der Folge werden insbesondere die Gewichtskräfte des Triebstrangs 50 nicht über die axiale Verschraubung an den Befestigungsbereichen 13, sondern vielmehr über die Radialanschlagflächen 15 direkt und unmittelbar in den Maschinenträger 10 eingeleitet.

In Abweichung zu der dargestellten Ausführungsform kann es vorteilhaft sein, die Radialanschlagflächen 15 derart getrennt und/oder beabstandet von dem jeweiligen Befestigungsbereich 13 anzuordnen, dass der Kraftfluss über die Radialanschlagflächen 15 nicht an den Durchgangslöchern 24 vorbeigeführt wird. Dies kann bspw. erreicht werden, wenn eine Radialanschlagfläche 15 gegenüber den Durchgangslöchern 24 und bezogen auf die Achse des kreisringsegmentförmigen Befestigungsbereichs 13 innenliegend angeordnet ist. Dadurch können Verformungen und daraus resultierende Kleinstbewegungen des jeweilige Ringelementes 20, 20' von der Verschraubung zu einem erheblichen Teil ferngehalten werden.

In Figur 3 ist das eine Ringelement 20 der Anordnung 1 aus Figur 1 dargestellt. Das Ringelement 20 ist als Lagerelement für als Loslager ausgebildetes Wälzlager 22, bspw. ein Toroidalrollenlager, ausgestaltet und weist eine entsprechende Lageraufnahme 21 auf.

Das Ringelement 20 weist eine Anschlagfläche 23 auf, die an die Form der Anschlagfläche 15 desjenigen Lagerpunktes 11 des Maschinenträgers 10, an welcher das Ringelement 20 befestigt werden soll, angepasst ist. Benachbart zu dieser Anschlagfläche 23 ist ein radiales Muster an axialen Durchgangsbohrungen 24 vorgesehen, welches ebenfalls an das entsprechende Muster an Bohrungen 14 am Maschinenträger 10 angepasst ist. Das Ringelement 20 lässt sich folglich durch ein Schrauben- oder Bolzenfeld derart sicher an dem Maschinenträger 10 befestigten, dass eine vorteilhafte Lastverteilung bei der Krafteinleitung in den Maschinenträger 10 erreicht wird.

Das Ringelement 20 weist eine axiale Versteifungsrippe 25 auf. Außerdem ist das Ringelement 20 bereichsweise noch in radialer Richtung mit Versteifungsrippen 26 erweitert, wodurch eine radiale Versteifung der besonders beanspruchten Bereiche des Ringelementes 20 erreicht werden kann.

In Figur 4 ist das anderen Ringelement 20' der Anordnung 1 aus Figur 1 dargestellt. Das Ringelement 20' ist als Befestigungsspant für das Getriebe 52 und insbesondere für die Befestigung des Getriebegehäuses 54 daran ausgebildet.

Dazu weist das Ringelement 20' ein radiales Bohrmuster 27 auf, an denen über elastische Abstandselemente 55 das Getriebegehäuse 54 befestigt werden kann (vgl. Figur 1). Die Befestigung ist dabei so ausgestaltete, dass das Ringelement 20' über die elastischen Abstandselemente 55 von den Vibrationen des Getriebes 52 entkoppelt ist.

Auch das Ringelement 20' weist eine Anschlagfläche 23 auf, die an die Form der Anschlagfläche 15 desjenigen Lagerpunktes 11' des Maschinenträgers 10, an welcher das Ringelement 20' befestigt werden soll, angepasst ist. Benachbart zu dieser Anschlagfläche 23 findet sich auch ein radiales Muster an axialen Durchgangsbohrungen 24 vorgesehen, welches ebenfalls an das entsprechende Muster an Bohrungen am Maschinenträger 10 angepasst ist. Außerdem ist eine axiale Versteifungsrippe 25 vorgesehen.

Wie in Figur 1 dargestellt, kann der Maschinenträger 10 auf einer um eine vertikale Achse 61 drehbare Platte 60 montiert werden, damit so der Rotor einer Windenergieanlage dem Wind in Azimutrichtung nachgeführt werden kann.

## Patentansprüche

1. Maschinenträger (10) zur Lagerung des Triebstrangs (50) einer Windenergieanlage mit zwei voneinander beabstandeten Lagerpunkten (11, 11'), **dadurch gekennzeichnet dass** an wenigstens einem Lagerpunkt (11, 11') ein Teilflansch (12) mit einem kreisringsegmentförmigen Befestigungsbereich (13) vorgesehen ist, wobei der kreisringsegmentförmige Befestigungsbereich (13) eine Vielzahl von Bohrungen (14) zur Axialverschraubung mit einem Ringelement (20, 20') aufweist.

2. Maschinenträger nach Anspruch 1,
**dadurch gekennzeichnet, dass**
der Teilflansch und/oder der kreisringsegmentförmige Befestigungsbereich (13) wenigstens eines Lagerpunktes (11, 11') ein Winkelsegment von 30° bis 280°, vorzugsweise 40° bis 200°, weiter vorzugsweise 80° bis 180° umfasst.

3. Maschinenträger nach einem der vorhergehenden Ansprüche
**dadurch gekennzeichnet, dass**
der kreisringsegmentförmige Befestigungsbereich (13) eine kreissegmentförmige Radialanschlagfläche (15) für ein Ringelement (20, 20') aufweist.

4. Maschinenträger nach einem der vorhergehenden Ansprüche
**dadurch gekennzeichnet, dass**
der Teilflansch (12) eine von eine Kreissegmentform abweichende, vorzugsweise elliptische oder wannenförmige Radialanschlagfläche (15) für ein Ringelement (20, 20') aufweist.

5. Maschinenträger nach einem der vorhergehenden Ansprüche
**dadurch gekennzeichnet, dass**
die Vielzahl von Bohrungen (14) zur Axialverschraubung in einem radialen Bohrmuster angeordnet sind.

6. Anordnung (1) zur Lagerung des Triebstrangs (50) einer Windenergieanlage, umfassend einen Maschinenträger (10) nach einem der vorhergehenden Ansprüche und wenigstens ein zum radialen Umschließen des Triebstrangs (50) ausgebildetes Ringelement (20, 20'), wobei wenigstens ein Ringelement (20, 20') an dem kreisringsegmentförmigen Befestigungsbereich (13) eines Lagerpunktes (11, 11') des Maschinenträger (10) befestigt ist.

7. Anordnung nach Anspruch 6,
**dadurch gekennzeichnet, dass**
das oder ein Ringelement (20) als Lagergehäuse mit einer Lageraufnahme (21) ausgebildet ist.

8. Anordnung nach Anspruch 7,
**dadurch gekennzeichnet, dass**
ein Rollenlager (22), vorzugsweise ein Pendel-, Zylinder-, Kegelrollen- oder Toroidallager, in der Lageraufnahme (21) angeordnet ist.

9. Anordnung nach einem der Ansprüche 6 bis 8,
**dadurch gekennzeichnet, dass**
das oder ein Ringelement (20') als Befestigungsspant für ein Getriebe (52) ausgestaltet ist.

10. Anordnung nach Anspruch 9,
**dadurch gekennzeichnet, dass**
am Befestigungsspant (20') elastische Kopplungselemente (55) zur Vibrationsentkopplung des Getriebes (52) vorgesehen sind.

11. Anordnung nach einem der Ansprüche 6 bis 10,
**dadurch gekennzeichnet, dass**
wenigstens ein Ringelement (20, 20') eine axiale Versteifungsrippe (25) aufweist.

12. Anordnung nach einem der Ansprüche 6 bis 11,
**dadurch gekennzeichnet, dass**
das wenigstens eine Ringelement (20, 20') durch Verschraubung, insbesondere über vorspannbare Gewindebolzen, mit einem Befestigungsbereich (13) eines Lagerpunktes (11, 11') des Maschinenträgers (10) verbunden ist.

13. Anordnung nach einem der Ansprüche 6 bis 12,
**dadurch gekennzeichnet, dass**
die Anordnung (1) den Triebstrang (50) einer Windenergieanlage umfasst, wobei wenigstens ein Ringelement (20, 20') koaxial um die Rotorwelle (51) des Triebstrangs (50) angeordnet ist.

14. Windenergieanlage mit einem Triebstrang umfassend eine Rotorwelle und ein Getriebe,
**dadurch gekennzeichnet, dass**
der Triebstrang (50) durch eine Anordnung (1) gemäß einem der Ansprüche 6 bis 13 gelagert ist.

## Claims

1. Machine support (10) for mounting the drivetrain (50) of a wind turbine, having two bearing points (11, 11') which are spaced apart from one another, **characterized in that** a partial flange (12) having a circular-ring-segment-shaped fastening region (13) is provided at at least one bearing point (11, 11'), wherein the circular-ring-segment-shaped fastening region (13) has a multiplicity of bores (14) for axial screw connection to a ring element (20, 20').

2. Machine support according to Claim 1,
**characterized in that**
the partial flange and/or the circular-ring-segment-shaped fastening region (13) of at least one bearing point (11, 11') comprises an angle segment of 30° to 280°, preferably 40° to 200°, more preferably 80° to 180°.

3. Machine support according to either of the preceding claims,
**characterized in that**
the circular-ring-segment-shaped fastening region (13) has a circle-segment-shaped radial stop surface (15) for a ring element (20, 20').

4. Machine support according to one of the preceding claims,
**characterized in that**
the partial flange (12) has a radial stop surface (15) for a ring element (20, 20') that has a shape deviating from the shape of a circle segment, said radial stop surface preferably being elliptical or trough-shaped.

5. Machine support according to one of the preceding claims,
**characterized in that**
the multiplicity of bores (14) for axial screw connection are arranged in a radial bore pattern.

6. Arrangement (1) for mounting the drivetrain (50) of a wind turbine, comprising a machine support (10) according to one of the preceding claims and at least one ring element (20, 20') which is configured for radially surrounding the drivetrain (50), wherein at least one ring element (20, 20') is fastened to the circular-ring-segment-shaped fastening region (13) of a bearing point (11, 11') of the machine support (10).

7. Arrangement according to Claim 6,
**characterized in that**
the or a ring element (20) is configured as a bearing housing having a bearing receptacle (21).

8. Arrangement according to Claim 7,
**characterized in that**
a roller bearing (22), preferably a self-aligning bearing, cylinder bearing, tapered roller bearing or toroidal bearing, is arranged in the bearing receptacle (21).

9. Arrangement according to one of Claims 6 to 8,
**characterized in that**
the or a ring element (20') is designed as a fastening frame for a gearbox (52).

10. Arrangement according to Claim 9,
**characterized in that**
elastic coupling elements (55) for vibration decoupling of the gearbox (52) are provided at the fastening frame (20').

11. Arrangement according to one of Claims 6 to 10,
**characterized in that**
at least one ring element (20, 20') has an axial stiffening rib (25).

12. Arrangement according to one of Claims 6 to 11,
**characterized in that**
the at least one ring element (20, 20') is connected to a fastening region (13) of a bearing point (11, 11') of the machine support (10) by way of screw connection, in particular via pre-stressable threaded bolts.

13. Arrangement according to one of Claims 6 to 12,
**characterized in that**
the arrangement (1) comprises the drivetrain (50) of a wind turbine, wherein at least one ring element (20, 20') is arranged in a coaxial manner around the rotor shaft (51) of the drivetrain (50).

14. Wind turbine having a drivetrain comprising a rotor shaft and comprising a gearbox,
**characterized in that**
the drivetrain (50) is mounted by way of an arrangement (1) according to one of Claims 6 to 13.

## Revendications

1. Support de machine (10) servant au montage de la chaîne cinématique (50) d'une éolienne, comportant deux points de palier (11, 11') espacés l'un de l'autre, **caractérisé en ce qu'**à au moins un point de palier (11, 11'), une bride partielle (12) dotée d'une région de fixation (13) en forme de segment d'anneau circulaire est prévue, la région de fixation (13) en forme de segment d'anneau circulaire comprenant une pluralité d'alésages (14) servant au vissage axial sur un élément annulaire (20, 20').

2. Support de machine selon la revendication 1,
**caractérisé en ce que**
la bride partielle et/ou la région de fixation (13) en forme de segment d'anneau circulaire d'au moins un point de palier (11, 11') comporte(nt) un segment angulaire de 30° à 280°, de préférence de 40° à 200°, mieux encore de 80° à 180°.

3. Support de machine selon l'une des revendications précédentes,
**caractérisé en ce que**
la région de fixation (13) en forme de segment d'anneau circulaire comprend une surface de butée radiale (15) en forme de segment circulaire pour un élément annulaire (20, 20').

4. Support de machine selon l'une des revendications précédentes,
**caractérisé en ce que**
la bride partielle (12) comprend une surface de butée radiale (15), différente d'une forme de segment circulaire, de préférence elliptique ou en forme de bac, pour un élément annulaire (20, 20').

5. Support de machine selon l'une des revendications précédentes,
**caractérisé en ce que**
la pluralité d'alésages (14) servant au vissage axial sont disposés suivant un motif de perçage radial.

6. Ensemble (1) servant au montage de la chaîne cinématique (50) d'une éolienne, comportant un support de machine (10) selon l'une des revendications précédentes et au moins un élément annulaire (20, 20') réalisé pour entourer radialement la chaîne cinématique (50), au moins un élément annulaire (20, 20') étant fixé à la région de fixation (13) en forme de segment d'anneau circulaire d'un point de palier (11, 11') du support de machine (10).

7. Ensemble selon la revendication 6,
**caractérisé en ce que**
le ou un élément annulaire (20) est réalisé sous forme de boîtier de palier doté d'un logement de palier (21).

8. Ensemble selon la revendication 7,
**caractérisé en ce**
**qu'**un palier à rouleaux (22), de préférence un palier à rotule, cylindrique, à rouleaux coniques ou toroïdal, est disposé dans le logement de palier (21).

9. Ensemble selon l'une des revendications 6 à 8,
**caractérisé en ce que**
le ou un élément annulaire (20') est configuré sous forme de cadre de fixation pour une transmission (52).

10. Ensemble selon la revendication 9,
**caractérisé en ce que**
des éléments de couplage élastiques (55) pour le découplage des vibrations de la transmission (52) sont prévus au niveau du cadre de fixation (20').

11. Ensemble selon l'une des revendications 6 à 10,
**caractérisé en ce**
**qu'**au moins un élément annulaire (20, 20') comprend une nervure de raidissement axiale (25).

12. Ensemble selon l'une des revendications 6 à 11,
**caractérisé en ce que**
l'au moins un élément annulaire (20, 20') est relié par vissage, en particulier par le biais de boulons filetés pouvant être précontraints, à une région de fixation (13) d'un point de palier (11, 11') du support de machine (10).

13. Ensemble selon l'une des revendications 6 à 12,
**caractérisé en ce que**
l'ensemble (1) comporte la chaîne cinématique (50) d'une éolienne, au moins un élément annulaire (20, 20') étant disposé de manière coaxiale autour de l'arbre de rotor (51) de la chaîne cinématique (50).

14. Éolienne dotée d'une chaîne cinématique comportant un arbre de rotor et une transmission,
**caractérisée en ce que**
la chaîne cinématique (50) est supportée au moyen d'un ensemble (1) selon l'une des revendications 6 à 13.
